# EUROPÄISCHE PATENTSCHRIFT

(11) **EP 1 610 994 B1**
(45) Veröffentlichungstag und Bekanntmachung des Hinweises auf die Patenterteilung: **22.11.2006**
(21) Anmeldenummer: 04713023.2
(22) Anmeldetag: 20.02.2004
(51) Int. Cl.: B61D 23/02, B60R 3/02

(54) **SCHIEBETRITT**
RETRACTABLE STEP
MARCHE COULISSANTE

(30) Priorität: 25.03.2003 AT 4722003
(43) Veröffentlichungstag der Anmeldung: 04.01.2006
(73) Patentinhaber: Knorr-Bremse Gesellschaft mit beschränkter Haftung, 2340 Mödling (AT)
(72) Erfinder: TAZREITER, Andreas, A-3340 Waidhofen a.d. Ybbs (AT)
(74) Vertreter: Schönmann, Kurt
(86) Internationale Anmeldenummer: PCT/EP2004/001667
(87) Internationale Veröffentlichungsnummer: WO 2004/085222

(56) Entgegenhaltungen:
- DE-A- 3 708 498
- DE-A- 10 043 561
- FR-A- 2 165 030
- GB-A- 2 223 211

## Beschreibung

Die Erfindung betrifft einen sogenannten Schiebetritt. Unter einem Schiebetritt versteht man eine Einstiegshilfe für das Betreten bzw. Verlassen von Fahrzeugen, insbesondere Schienenfahrzeugen, wobei zur Überbrückung des Spaltes zwischen dem Fahrzeug und dem Bahnsteig od.dgl. vom Fahrzeug eine begehbare Fläche im wesentlichen in linearer Richtung ausgeschoben wird. Eine solche Vorrichtung ist durch die FR- 2.165.030 bekannt.

Je nach der Positionierung zwischen dem Fahrzeugkasten und dem Bahnsteig gelangt der Schiebetritt, zumeist gegen Ende seiner Ausfahrbewegung, in den Bereich des Bahnsteiges und es besteht dabei die Gefahr, dass er seitlich in die im wesentlichen vertikal verlaufende Bahnsteigwand fährt. Diesem Problem ist durch Sensoren im Bereich der Vorderkante des Schiebetritts beizukommen.

Ein anderes Problem besteht darin, dass es während des Haltes des Fahrzeuges in der Station bei ausgeschobenem Schiebetritt zu einer Höhenänderung des Schiebetritts kommen kann. Dies kann durch Nachgeben der Federung, durch Änderung der Fahrzeugladung beim Ein- und Aussteigen von Fahrgästen, durch wechselnde Windlast u.dgl. mehr in kurzer Zeit geschehen. Die größtmögliche Höhenänderung ist dabei durch verschiedene Parameter des Fahrzeuges (Art der Federung, Position der Anschläge, Länge der Hebelarme des Schiebetritts bezüglich der Schwenkachse, etc.) festgelegt und wird in der Folge maximaler Höhenwechsel genannt. Durch die tatsächliche Änderung der Höhenlage im Rahmen dieses maximalen Höhenwechsels kann es nun dazu kommen, dass Gepäck oder Passagiere eingeklemmt werden, oder der Schiebetritt beschädigt wird, wenn sich der Schiebetritt entsprechend absenkt. Da sich die gefährdeten Gegenstände im allgemeinen nicht über die gesamte Breite des Schiebetritts erstrecken und nicht vorhergesagt werden kann, in welchem Bereich des Schiebetritts sie sich befinden, war eine Detektion bisher unmöglich und man mußte die Gefahr des Einklemmens von Körperteilen bzw. Gegenständen oder eine Beschädigung des Schiebetritts in Kauf nehmen.

Die Erfindung zielt darauf ab, dies zu ändern und eine Vorrichtung anzugeben, mit der es möglich ist, eine solche Detektion einwandfrei und dabei kostengünstig durchzuführen.

Erfindungsgemäß wird dies dadurch erreicht, dass eine Leiste mit dem Schiebetritt beweglich verbunden ist, die sich im wesentlichen über die gesamte Länge des Schiebetritts erstreckt und im aktivierten Zustand im wesentlichen unter der Frontkante des Schiebetritts befindet, und dass zumindest ein Sensor vorgesehen ist, der die Position der Leiste und/oder die von der Leiste auf den Schiebetritt übertragene Kraft erfaßt.

Dadurch kann jede unzulässige Annäherung an die Oberseite des Bahnsteiges ebenso erfaßt werden wie die drohende Gefahr des Einklemmens eines Gegenstandes oder Körperteiles. Durch die Positionierung der Leiste wird während des Ausfahrens des Schiebetritts auch der Raum (Detektionsraum) erfaßt, in dem sich beim Absenken, beispielsweise aus einem der oben genannten Gründe, der Schiebetritt bewegen könnte, und so gesichert. Der aktivierte Zustand wird von der Leiste zumindest während des Ausfahrens des Schiebetritts eingenommen.

Durch die bewegliche Verbindung zwischen Leiste und Schiebetritt wird es möglich, die Leiste bereits während des Ausfahrens des Schiebetritts, gegebenenfalls automatisch, in die gewünschte Position zu bringen. Die Überwachung dieser Position bleibt während des Ausfahrens des Schiebetritts in seine Endlage aktiviert.

Wird eine Änderung der Position der Leiste detektiert, wird die Ausfahrbewegung gestoppt und der Schiebetritt um eine vorbestimmte Länge zurückgefahren, durch die ein sicherer Abstand vom Hindernis gewährleistet ist. Zusätzlich kann beispielsweise ein akustisches und/oder optisches Alarmsignal abgegeben werden. Selbstverständlich ist eine andere Reaktion möglich, wenn dies vom Betreiber gewünscht wird.

Die Leiste selbst kann entweder eine zur Ausfahrtrichtung des Schiebetritts schräge, aber im wesentlichen lineare Ausschubbewegung vollführen, sie kann auch eine Drehbewegung vollführen und sozusagen ausgeklappt werden.

Als eigentlicher Sensor eignen sich je nach Bauart und Bewegung der Leiste, die unterschiedlichsten Sensoren, die als Schalter oder Dehnmeßstreifen ausgebildet sein können oder auf elektrodynamischem oder piezzoelektrischem Effekt beruhen. Die Sensoren können entweder direkt in der Leiste angeordnet sein und die Kraft zwischen Untergrund und Leiste messen oder sie sind im Bereich der Lager der Leiste untergebracht und messen die Kräfte zwischen Leiste und Schiebetritt, die ja von den zuerst genannten Kräften herrühren.

Der Übergang der Leiste von der passiven Stellung in die aktive Stellung kann durch das Eigengewicht der Leiste, eine Kulissenführung und eventuell eine Feder geschehen. Es ist selbstverständlich auch möglich, einen motorischen Antrieb vorzusehen.

Günstig ist es zum Erreichen des Erfindungszieles und insbesondere dann, wenn beim Feststellen einer Einklemmgefahr der Schiebetritt zurückgezogen werden soll, dass die Leiste bei dieser Rückzugsbewegung eventuell bereits eingeklemmte Gegenstände möglichst rasch ohne weitere Belastung freigibt und nicht einklemmt und fixiert.

Die Erfindung wird im folgenden an Hand der Zeichnung näher erläutert. Dabei zeigt
die Fig. 1 eine Frontansicht auf eine erfindungsgemäß ausgebildete Einstiegshilfe,
die Fig. 2 einen rein schematischen Schnitt in Richtung des Pfeiles II der Fig. 1,
die Fig. 3 eine Variante eines Schiebetritts ähnlich dem der Fig. 2 in vergrößertem Maßstab,
die Fig. 4 eine Ansicht ähnlich der Fig. 3 einer anderen Variante der Erfindung und
die Fig. 5 die Variante der Erfindung gemäß Fig. 4 in einer anderen Position zwischen dem Fahrzeug und dem Bahnsteig.

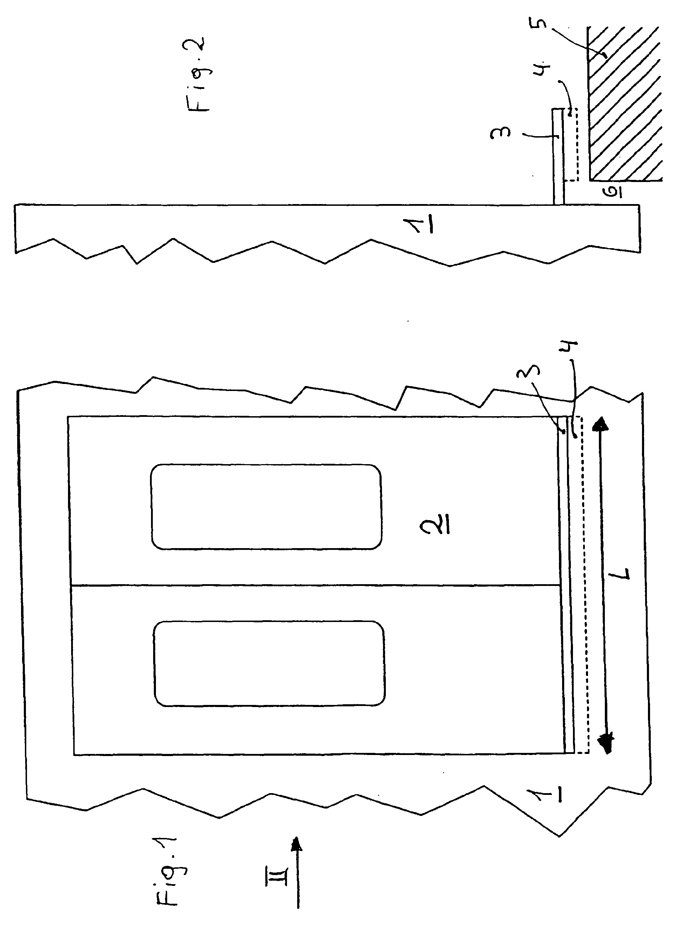

Die Fig. 1 zeigt ein Fahrzeug 1 mit einer zweiflügeligen Tür 2 und einem Schiebetritt 3. Unterhalb des Schiebetritts 3 ist mit strichlierten Linien der sogenannte Detektionsraum 4 dargestellt, d.i. jener Raum, der von der erfindungsgemäßen Vorrichtung während des Ausschiebens des Schiebetritts auf Kollisions- bzw. Einklemmgefahr überwacht werden soll.

Die Positionierung und Bedeutung dieses Detektionsraumes 4 wird aus dem Zusammenhalt der Fig. 1 und 2 ersichtlich: In Fig. 2 ist ein Bahnsteig 5 eingezeichnet, wie er normgemäß bezüglich des Fahrzeuges 1 mit seiner Oberfläche und seiner Seitenwand verlaufen soll. Zwischen dem Bahnsteig 5 und dem Fahrzeug 1 besteht auf unvermeidbare Weise ein Spalt 6, genau dieser Spalt, der in vielen Fällen, man denke an Bahnsteige in gebogenen Gleisabschnitten bei Schienenfahrzeugen, auch deutlich breiter als im gezeigten Ausführungsbeispiel sein kann und zu dessen gefahrloser Überwindung bzw. Übersteigen der Schiebetritt 3 vorgesehen ist.

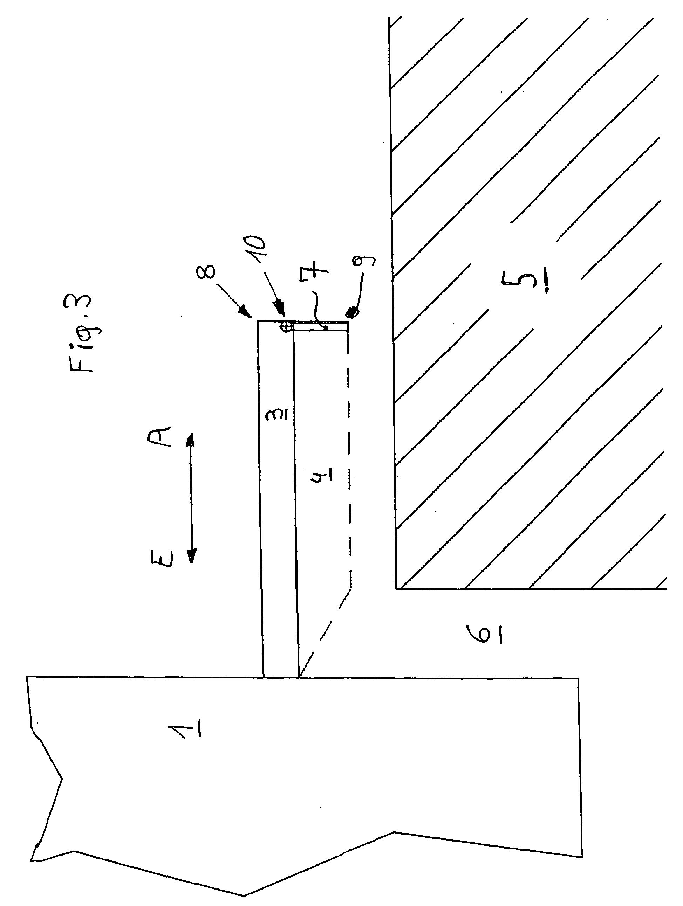

Die Fig. 3 zeigt die Situation im Bereich des Bahnsteiges 5 im vergrößerten Maßstab, aber ebenfalls völlig schematisch. Im gezeigten Ausführungsbeispiel besteht die erfindungsgemäß vorgesehene Leiste 7 aus einer drehbaren Klappe, die sich über die gesamte Länge L (Fig. 1) des Schiebetrittes 3 erstreckt und sich im wesentlichen genau unterhalb der Vorderkante 8 des Schiebetrittes 3 befindet, wenn sie in ihrer aktivierten Position, wie in Fig. 3 dargestellt, ausgefahren ist.

Die strichlierte Linie unterhalb des Schiebetrittes 3 deutet wiederum den Detektionsraum 4 an, d.i. der Raum, den die Unterkante 9 der Leiste 7 während des Ausfahrens in Richtung A des Doppelpfeiles E-A überstreicht. Wenn während des Ausfahrens die Leiste 9 an irgendeiner Stelle der Länge L gegen ein Hindernis stößt, wird dies durch einen Sensor, der im Ausführungsbeispiel im Lager 10 zwischen der Leiste 7 und dem Schiebetritt 3 angeordnet ist, festgestellt und es werden die vom Betreiber dafür vorgesehenen Maßnahmen ergriffen. Die Leiste muß nach Erreichen der Endposition des Schiebetrittes wegklappen und den Detektionsraum freigeben.

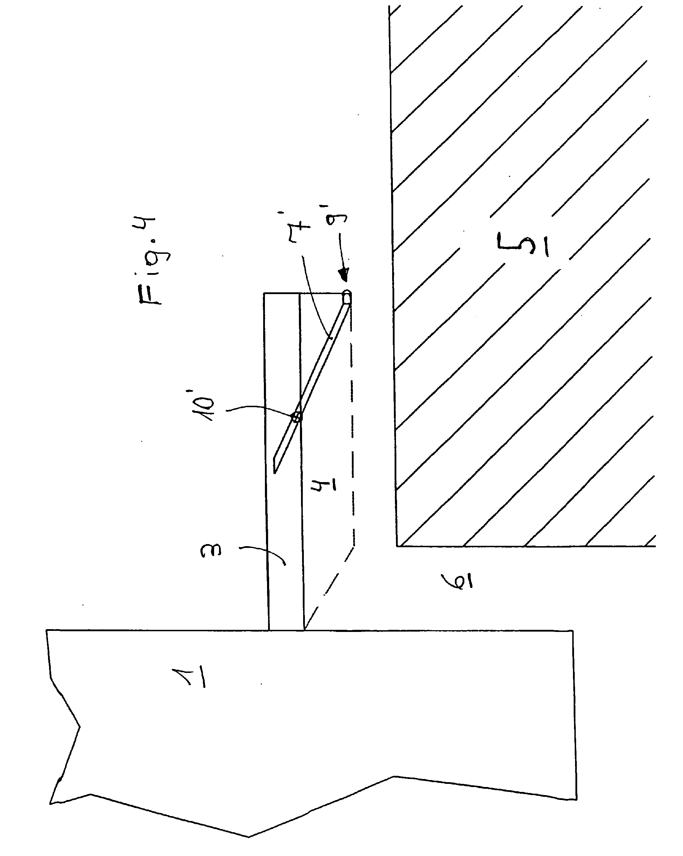

Die Fig. 4 zeigt, ebenfalls rein schematisch, eine andere Ausführungsform einer Leiste 7', in diesem Beispiel wird die Leiste um ein Gelenk 10' nach unten abgesenkt, auf ähnliche Weise wäre eine Schiebebewegung möglich. Die Bewegung der Leiste 7 bzw. 7' zwischen der dargestellten aktiven Position und der an den Schiebetritt angelegten bzw. in Ausnehmungen des Umrisses des Schiebetrittes 3 eingeschobenen Position wird durch das Eigengewicht und/oder durch Unterstützung mittels Federkraft bewirkt, selbstverständlich ist, wie oben erwähnt, auch eine aktive Bewegung durch einen Stellmotor od.dgl. möglich.

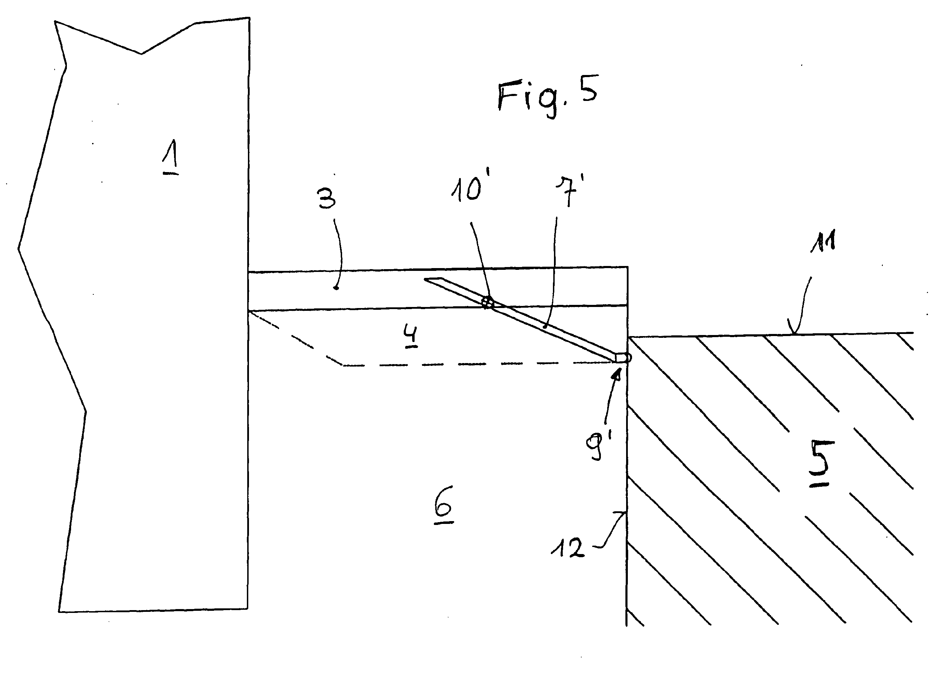

Die Fig. 5 zeigt die Situation, die sich bei einer erfindungsgemäßen Vorrichtung nach Fig. 4 dann ergibt, wenn bereits beim Ausfahren des Schiebetrittes 3 die Höhenlage des Fahrzeuges 1 bezüglich der Bahnsteigoberkante 11 zu niedrig ist, so dass die Leiste 7' mit ihrer Frontkante 9' gegen die vertikale Front 12 des Bahnsteiges 5 unterhalb der Bahnsteigoberkante 11 stößt. Es wird auch dies durch den Lagesensor im Gelenk 10' festgestellt und führt zur vorgegebenen Reaktion, wie oben angeführt. Das gleiche geschieht, wenn die Leiste 7' gegen ein anderes Hindernis stößt. Statt des Lagesensors im Gelenk 10' kann ein Kraftsensor direkt an der Frontkante 9' der Leiste 7' angeordnet sein.

Die Erfindung ist nicht auf die geschilderten und beschriebenen Ausführungsbeispiele eingeschränkt. So ist es möglich, die Frontkanten 9, 9' selbst als Sensoren auszubilden, sei es indem diese Kanten Profile tragen, die als elektrische Schaltleisten ausgebildet sind oder die mit Gas gefüllt sind, wobei der Anstieg des Gasdruckes beim Auflaufen auf ein Hindernis gemessen und festgestellt wird oder sei es, dass die Leisten 7, 7' ihrerseits aus zwei zueinander beweglichen Teilen bestehen und die Bewegung dieser Teile zueinander als Maß für das Auftreffen auf ein Hindernis herangezogen wird.

Wesentlich ist, dass im Bereich unterhalb der Vorderkante 8 des Schiebetritts 3 und über die gesamte Länge 11 des Schiebetrittes eine Leiste 7, 7' angeordnet ist und dass mittels eines Sensors die auf diese Leiste in ihrer Gesamtheit wirkende Belastung und/oder die Position der Leiste festgestellt wird und dass bei Überschreiten eines vorgegebenen Wertes die Bewegung gestoppt und gegebenenfalls Alarm ausgelöst wird.

## Patentansprüche

1. Schiebetritt für das Betreten bzw. Verlassen von Fahrzeugen (1), insbesondere von Schienenfahrzeugen, wobei zur Überbrückung des Spaltes (6) zwischen dem Fahrzeug (1) und dem Bahnsteig (5) od.dgl. vom Fahrzeug eine begehbare Fläche, ein Schiebetritt (3), im wesentlichen in linearer Richtung ausgeschoben wird, wobei der Schiebetritt eine Vorrichtung mit zumindest einem Sensor umfasst, die einer Kollision mit Hindernissen während des Ausschiebens vorbeugen soll, **dadurch gekennzeichnet, dass** die Vorrichtung eine Leiste (7, 7') ist, die mit dem Schiebetritt (3) beweglich verbunden ist, sich im wesentlichen über die gesamte Länge (L) des Schiebetritts erstreckt und sich im aktivierten Zustand im wesentlichen unter der Vorderkante (8) des Schiebetritts (3) befindet, und zumindest einen Sensor umfasst, der entweder die Position der Leiste (7, 7') bezüglich des Schiebetrittes oder die von der Leiste auf den Schiebetritt übertragene Kraft erfaßt.

2. Schiebetritt nach Anspruch 1, **dadurch gekennzeichnet, dass** die Leiste (7) eine drehhare Klappe ist.

3. Schiebetritt nach Anspruch 1, **dadurch gekennzeichnet, dass** die Leiste (7') ein drehbarer Bügel ist.

4. Schiebetritt nach Anspruch 1, **dadurch gekennzeichnet, dass** die Leiste ein in einer Führung verschieblicher Bügel ist.

5. Schiebetritt nach Anspruch 2 oder 3, **dadurch gekennzeichnet, dass** der Sensor einen Winkel zwischen der Leiste (7, 7') und dem Schiebetritt mißt.

6. Schiebetritt nach einem der Ansprüche 1 bis 4, **dadurch gekennzeichnet, dass** der Sensor an der Frontkante (9, 9') der Leiste montiert ist.

## Claims

1. A retractable step for entering or leaving vehicles (1), in particular rail vehicles, whereby a passable surface, a retractable step (3), is extended essentially linearly from the vehicle in order to bridge the gap (6) between the vehicle (1) and the platform (5) or similar element, the retractable step comprising a device with at least one sensor which is designed to prevent a collision with obstacles during extension,
**characterised in that**
the device is a strip (7, 7') which is connected to the retractable step (3) in such a manner that it is able to move, extends essentially along the entire length (L) of the retractable step and in the activated state is located essentially beneath the front edge (8) of the retractable step (3), and comprises at least one sensor which measures either the position of the strip (7, 7') in relation to the retractable step or the force transmitted from the strip to the retractable step.

2. A retractable step in accordance with claim 1,
**characterised in that**
the strip (7) is a rotating flap.

3. A retractable step in accordance with claim 1,
**characterised in that**
the strip (7') is a rotating strap.

4. A retractable step in accordance with claim 1,
**characterised in that**
the strip is a strap which can be moved in a guide.

5. A retractable step in accordance with claim 2 or 3,
**characterised in that**
the sensor measures an angle between the strip (7, 7') and the retractable step.

6. A retractable step in accordance with claim 1 to 4,
**characterised in that**
the sensor is mounted on the front edge (9, 9') of the strip.

## Revendications

1. Marche coulissante pour monter dans des véhicules (1) et/ou en descendre, notamment des véhicules sur rails, une surface praticable, une marche (3) coulissante, pour faire pont au-dessus de l'intervalle (6) entre le véhicule (1) et le quai (5) ou analogue, pouvant coulisser du véhicule sensiblement en direction linéaire, la marche coulissante comportant un dispositif qui a au moins un capteur et qui cherche à prévenir une collision avec des obstacles pendant le coulissement, **caractérisée en ce que** le dispositif est une baguette (7, 7') qui est reliée de manière mobile à la marche (3) coulissante, qui s'étend sensiblement sur toute la longueur (L) de la marche coulissante et qui, à l'état actif, se trouve sensiblement en dessous de l'arête (8) avant de la marche (3) coulissante, et qui comporte au moins un capteur qui détecte soit la position de la baguette (7, 7') par rapport à la marche coulissante, soit la force transmise par la baguette à la marche coulissante.

2. Marche coulissante suivant la revendication 1, **caractérisée en ce que** la baguette (7') est un volet pivotant.

3. Marche coulissante suivant la revendication 1, **caractérisée en ce que** la baguette (7') est un étrier pivotant.

4. Marche coulissante suivant la revendication 1, **caractérisée en ce que** la baguette est un étrier coulissant dans un dispositif de guidage.

5. Marche coulissante suivant la revendication 2 ou 3, **caractérisée en ce que** le capteur mesure un angle entre la baguette (7, 7') et la marche coulissante.

6. Marche coulissante suivant l'une des revendications 1 à 4, **caractérisée en ce que** le capteur est monté sur l'arête (9, 9') frontale de la baguette.
